# EUROPÄISCHE PATENTSCHRIFT

(11) **EP 3 322 904 B1**
(45) Veröffentlichungstag und Bekanntmachung des Hinweises auf die Patenterteilung: **06.01.2021**
(21) Anmeldenummer: 16739084.8
(22) Anmeldetag: 11.07.2016
(51) Int. Cl.: F16B 19/10, F16B 13/08, F16B 43/00

(54) **VERFAHREN ZUR HERSTELLUNG EINER VERBINDUNG**
METHOD FOR ESTABLISHING A CONNECTION
PROCÉDÉ POUR RÉALISER UNE LIAISON

(30) Priorität: 13.07.2015 DE 102015009044
(43) Veröffentlichungstag der Anmeldung: 23.05.2018
(73) Patentinhaber: SFS Intec Holding AG, 9435 Heerbrugg (CH)
(72) Erfinder: PALM, Erich, 9434 Au (CH); BACHMANN, Oliver, 9443 Widnau (CH)
(86) Internationale Anmeldenummer: PCT/EP2016/066416
(87) Internationale Veröffentlichungsnummer: WO 2017/009280

(56) Entgegenhaltungen:
- EP-A1- 1 455 970
- EP-B1- 0 841 491
- DE-A1- 19 540 904
- DE-A1-102007 053 136
- US-A1- 2007 243 036

## Beschreibung

Die Erfindung betrifft eine Hülse und ein Verfahren zur Herstellung einer Verbindung, insbesondere einer Verbindung zwischen einem Bauteil und einem Baukörper, wobei es sich bei dem Bauteil insbesondere um ein Profilteil und bei dem Baukörper insbesondere um eine Verkleidungsplatte handeln kann.

Beispielsweise um Fassadenplatten in entsprechende Trägerkonstruktionen an der Fassade einhängen zu können, ist es erforderlich, geeignete Profile an den Fassadenplatten zu befestigen. Dabei kommt es zum einen auf eine einfache Montagemöglichkeit, zum anderen aber auch auf eine sichere Halterung an. Bei Fassadenplatten mit einer Stärke ab 8 mm ist es dabei in der Regel möglich, die Befestigungsstellen im eingehängten Zustand der Fassadenplatten unsichtbar zu gestalten, indem in der Fassadenplatte keine Durchgangsbohrungen oder Löcher sondern Sacklöcher vorgesehen werden, wobei die Sacklöcher entweder vorgebohrt oder sonst wie vorgefertigt werden können.

### Stand der Technik

Aus der europäischen Patentschrift EP 0 841 491 B1 ist in diesem Zusammenhang ein in ein Sackloch eingesetztes Befestigungselement zur Fixierung von Bauteilen an Baukörpern bekannt. Das Befestigungselement umfasst dabei eine umfangsgeschlossene rohrförmige Hülse, die einen Anschlagflansch und einen zumindest auf einem Teil seiner Länge an der Außenwandung mit Erhebungen und Vertiefungen ausgeführten Schaftteil. Weiterhin umfasst das Befestigungselement einen Aufweitdorn mit einem Zugstift, der sich durch eine mittige Durchgangsbohrung der Hülse erstreckt. Gemäß der Lehre der in Rede stehenden Patentschrift sind die Erhebungen und Vertiefungen am Schaftteil der Hülse als Gewinde ausgeführt, dessen Außendurchmesser gleich oder kleiner als der Durchmesser des Sackloches ist, in welches die Hülse eingesetzt ist. Als wesentlich und besonders vorteilhaft wird es dabei erachtet, dass der mit einem Gewinde versehene Teilabschnitt des Schaftteiles von dessen freien Ende ausgehend nur über einen kurzen Bereich geführt ist, welcher kleiner ist als die Tiefe des Sackloches, in welches die Hülse eingesetzt ist.

Mit dieser Befestigungstechnik werden beispielsweise im Zusammenhang mit HPL-Fassadenplatten (HPL = High Pressure Laminate) hervorragende Ergebnisse erzielt, weil die Montage bei einem günstigen Preis einfach, schnell und sicher erfolgen kann. Die Vorgehensweise ist dabei so, dass das Befestigungselement durch eine Durchgangsbohrung des Profilteils (oder irgendeines anderes Bauteils) und in ein Sackloch der Fassadenplatte (oder in eine Bohrung irgendeines anderen Baukörpers) eingeführt wird, und zwar derart, dass der Anschlagflansch an dem Profil anliegt. Anschließend wird der Außendurchmesser der Hülse mithilfe des Aufweitdorns so weit aufgeweitet, dass der Gewindeabschnitt sicher in dem Baukörper verankert wird. Die von dem Anschlagflansch auf das Profilteil ausgeübte Kraft in axiale Richtung ist dabei insbesondere von der Kraft abhängig, die während des Aufweitvorgangs in axialer Richtung auf den Anschlagflansch ausgeübt wurde, beispielsweise mittels eines Werkzeugs, das zum Herausziehen des Zugstiftes gegen den Anschlagflansch abgestützt wird.

Die Schrift DE 195 40 904 A1 beschreibt ein Nietverfahren, bei dem ein Niet bestehend aus einem Nietschaft und einem Nietkopf sowie einem Dorn, der in dem Nietschaft geführt ist, in einer definierten Bohrung eines Bauteilstapels aus Metallplatten und einer Kunstharztafel eingesetzt wird. Der Niet wird dabei nicht bündig mit der Oberkante des kopfnächsten Bauteils eingesetzt, sondern mit einem gewissen Abstand zwischen der Nietkopfunterseite und der Bauteiloberfläche.

Der Dorn weist an dem kopfabgewandten Ende des Niets einen Dornkopf auf und wird, wie bei gängigen Nietverfahren bekannt, in Richtung des Nietkopfes durchgezogen. Dadurch weitet der Dornkopf das kopfferne Ende des Nietschaftes auf und schafft eine kraft- bzw. formschlüssige Verbindung der Bauteile des Stapels. Besagter Stand der Technik beschreibt mehrere Varianten von Nieten mit verschiedenen Geometrien.

Die US-Publikationsschrift US 2007/0243036 A1 beschreibt einen nietähnlichen Zugnagel, bestehend aus einem Nagel mit einem Schaft, einem gegenüber dem Schaft im Durchmesser vergrösserten Kopf und einem im Durchmesser verkleinerten Halsabschnitt zwischen Kopf und Schaft. Ferner wird eine Tülle verwendet, bestehend aus einer Hülse mit einem flanschähnlichen Kopf. Vor der Verwendung wird der Zugnagel so in die Tülle eingesteckt, dass der Kopf am flanschabgewandten Hülsenende anliegt. Die Tülle wird mit Zugnagel in eine Bohrung eingesteckt, so dass der Flansch an der Oberfläche mit der Bohrung anschlägt. Durch Abziehen des Zugnagels wird der Nagelkopf in das freie Ende der Hülse gezogen, wonach der Kopf am Halsabschnitt abbricht. Der verbleibende Kopf sorgt für eine formschlüssige Verbindung der durchbohrten Bauteile. Die Schrift schlägt auch vor, einen zwischen Flanschunterseite und Bohrlochoberseite angebrachten Dichtring zu verwenden.

Der Stand der Technik EP 1 455 970 A0 entsprechend WO 03 / 051 557 beschreibt ein Verfahren zur Befestigung einer schraubenähnlich ausgeführten Zughülse. Sie verfügt über einen Kopf und einen Schaft, welcher axial eine Bohrung aufweist, in der ein Zugdorn mit einem Spreizkopf platziert wird. Nach Einschieben der Zughülse in eine Bohrung wird der Dorn gezogen, so dass dessen Spreizkopf die Zughülse aufweitet und an die Wandung presst.

Ferner zeigt die Schrift DE 10 2007 053 136 A1 ein ähnliches Befestigungselement dieser Art auf. Das dem Nietdorn abgewandte Ende der Zughülse weist Erhebungen auf, die in eine Bohrungswand eingepresst werden können. Mit einer zusätzlichen Spreizhülse mit diskreten Spreizsegmenten lässt sich auch eine Hinterschnittverankerung erzielen.

Vor dem Hintergrund dieses bekannten Standes der Technik liegt der Erfindung die Aufgabe zugrunde, eine Hülse und ein Verfahren zur Herstellung einer Verbindung, ohne darauf beschränkt zu sein, beispielsweise einer Befestigung eines Profils an einer Fassadenplatte, anzugeben, mit dem die nach der Verbindung zwischen den Verbindungspartnern wirkenden Kräfte im Vergleich zum Stand der Technik genauer vorherbestimmt werden können, ohne dass sich dadurch Nachteile im Hinblick auf die Einfachheit, die Geschwindigkeit und die Sicherheit der Montage oder höhere Kosten ergeben.

### Beschreibung der Erfindung

Diese Aufgabe wird durch eine Hülse nach Anspruch 1 und ein Verfahren nach Anspruch 4 gelöst, bei der erfindungsgemäss zumindest der freie Endabschnitt einen äußeren Hülsenteil und einen inneren Hülsenteil aufweist, die formschlüssig und/oder kraftschlüssig verbunden sind. Dabei handelt es sich um eine umfangsgeschlossene Hülse, deren Umfangsgeschlossenheit auch bei der Aufweitung erhalten bleibt.

Bei dieser Lösung wird nicht nur der Außendurchmesser der Hülse zumindest abschnittsweise vergrößert, sondern gleichzeitig auch die axiale Länge der Hülse verringert. Dadurch ist es möglich, die letztlich vom Anschlagflansch direkt oder indirekt ausgeübte axiale Kraft vorherzubestimmen. Dies hat sich beispielsweise im Zusammenhang mit Fassadenplatten aus Faserzement oder Glasfaserbeton und daran zu befestigenden Profilteilen als besonders vorteilhaft herausgestellt, wobei die Erfindung selbstverständlich nicht auf diesen Einsatzzweck beschränkt ist, sondern überall angewendet werden kann, wo es auf definierte Kräfte zwischen den Verbindungspartnern bei einer kostengünstigen, einfachen, schnellen und sicheren Montage ankommt.

Wie erwähnt, lässt sich das erfindungsgemäße Verfahren besonders vorteilhaft in Fällen einsetzen, bei denen sich die Bohrung durch ein Bauteil und in einen Baukörper erstreckt, beispielsweise durch ein Profilteil und als Sackloch in eine Verkleidungsplatte. Der Begriff "Bohrung" ist im Rahmen der Erfindung weit auszulegen und soll nicht nur durch klassische Bohrvorgänge erzeugte Löcher und/oder Vertiefungen umfassen, sondern auch Löcher beziehungsweise Vertiefungen, die auf irgendeine andere Weise vorgefertigt wurden. Im Falle von Sacklöchern kann der anfängliche Abstand des Anschlagflansches vom Bohrungsrand in besonders einfacher Weise durch die Gesamttiefe der Bohrung vorbestimmt werden, wobei die Gesamttiefe der Bohrung zu diesem Zweck natürlich kleiner als der Abstand zwischen Anschlagflansch und Hülsenende beziehungsweise zwischen Anschlagflansch und einem sich gegebenenfalls aus dem Hülsenende hinauserstreckenden Dorn sein muss.

Bei der Hülse handelt es sich um eine umfangsgeschlossene Hülse, deren Umfangsgeschlossenheit auch bei der Aufweitung erhalten bleibt. Durch die Aufrechterhaltung der Umfangsgeschlossenheit, das heißt die Vermeidung von irgendwelchen Schlitzen in der Hülse, kann ein Rückfedern von nach außen gedrängten Bereichen der Hülse vermieden werden, so dass auch die Verankerungskräfte wohl definiert sind und bleiben.

Im Rahmen des erfindungsgemäßen Verfahrens kann vorgesehen sein, dass es sich bei der wenigstens einen Erhebung um eine radial in eine Spitze oder Rundung auslaufende Erhebung handelt. Die optimale Form der Erhebung kann dabei in Abhängigkeit von dem Material gewählt werden, aus dem die jeweilige Bohrungswand besteht, wobei es natürlich ebenfalls denkbar ist, mehrere Erhebungen vorzusehen, die gegebenenfalls auch eine unterschiedliche Form aufweisen können.

Besonders gute Verankerungsergebnisse werden beispielsweise erzielt, wenn es sich bei der wenigstens einen Erhebung um wenigstens eine umlaufende sägezahnförmige Rippe oder einen Gewindeabschnitt handelt. Das Vorsehen eines Gewindeabschnittes bringt dabei den Vorteil mit sich, dass die Verbindung durch das Herausschrauben der aufgeweiteten Hülse lösbar gestaltet werden kann, was beispielsweise bei einer umlaufenden sägezahnförmigen Rippe in der Regel nicht der Fall sein wird. Es sollte jedoch klar sein, dass ein eventuell verwendeter Gewindeabschnitt nicht dazu vorgesehen ist, die zwischen den Verbindungspartnern wirkenden Kräfte nach Art eines Anzugsmoments einzustellen, weil diese Kräfte erfindungsgemäß ohne Drehung der Hülse alleine durch die Verkürzung der Hülse bestimmt werden.

Ganz besondere Vorteile ergeben sich, wenn die Hülse im Bereich des Anschlagflansches von einem scheibenförmigen Element umgeben ist. Denn durch ein derartiges scheibenförmiges Element kann der anfängliche Abstand zwischen Anschlagflansch und Bohrungsrand festgelegt werden, sofern die Bohrung eine ausreichende Gesamttiefe aufweist oder eine Durchgangsbohrung ist.

In solchen Fällen wird in der Regel vorgesehen sein, dass das scheibenförmige Element kompressibel ist und bei der Bewegen des Anschlagflansches in Richtung auf die wenigstens eine feststehende verankerte Erhebung des freien Endabschnitts der Hülse zu komprimiert wird. Dabei wird besonders bevorzugt, dass es sich bei der Komprimierung um eine elastische Komprimierung handelt, weil dadurch die zwischen den Verbindungspartnern in axialer Richtung der Hülse wirkenden Kräfte besonders gut vorherbestimmt werden können.

Als besonders vorteilhaft werden derzeit Lösungen erachtet, bei denen vorgesehen ist, dass das scheibenförmige Element um 10 bis 90 %, vorzugsweise um 20 bis 80 % und besonders bevorzugt um 30 bis 70 % komprimiert wird.

Es kann beispielsweise vorgesehen sein, dass das scheibenförmige Element aus einem Elastomer besteht, beispielsweise aus Chloropren-Kautschuk, Naturkautschuk oder Ethylen-Propylen-Dien-Kautschuk. Neben der Vorherbestimmung der letztlich zwischen den Verbindungspartnern wirkenden Kräfte können diese Materialien gegebenenfalls auch eine Dichtfunktion übernehmen.

Bei bevorzugten Ausführungsformen des erfindungsgemäßen Verfahrens ist vorgesehen, dass die Aufweitung des freien Endabschnitts und des weiteren Abschnitts der Hülse mit Hilfe eines Dorns erfolgt, der mit einem Zugstift in Verbindung steht, der sich durch die Hülse und deren Anschlagflansch hindurch erstreckt. Die für die Hülse, den Dorn und den Zugstift gewählten Materialien sind dabei so aufeinander abzustimmen, dass sich die gewünschte Verformung der Hülse einstellt, wobei der Dorn und der Zugstift vorzugsweise zumindest weitgehend unverformt bleiben. Der Zugstift kann gegebenenfalls mit einer Sollbruchstelle, beispielsweise in Form einer Kerbe, ausgestattet sein, falls vorgesehen ist, dass zumindest der Dorn Bestandteil der Verbindung bleibt. Eine in diesem Fall zum Abreißen des Zugstiftes erforderliche Erhöhung der Zugkraft kann beispielsweise erreicht werden, wenn der die Aufweitung bewirkende Dorn in den Bereich des Anschlagflansches der Hülse kommt, wobei die radiale Aufweitung durch die größere Materialansammlung in diesem Bereich wesentlich mehr Zugkraft erfordert. Es sind aber auch Lösungen denkbar, bei denen ein vollständiges Herausziehen des Dorns aus der Hülse vorgesehen ist. So können beispielsweise mehrere Hülsen nach Art eines Magazins auf einem einzigen entsprechend langem Dorn aufgereiht und dann nacheinander gesetzt werden.

Es hat sich in diesem Zusammenhang als vorteilhaft herausgestellt, dass der Dorn sich auf den Durchmesser des Zugstiftes konisch verjüngt, denn durch diese Maßnahme wird die Aufweitung der Hülse erleichtert.

Dabei kann gegebenenfalls weiterhin vorgesehen sein, dass der sich konisch verjüngende Abschnitt des Dorns vor der Aufweitung des freien Endabschnitts der Hülse zumindest abschnittsweise von einem sich trichterförmig erweiternden Endabschnitt der Hülse aufgenommen wird. Die trichterförmige Erweiterung wird dabei vorzugsweise durch eine sich verringernde Wandstärke der Hülse zur Verfügung gestellt, also ohne dass sich der Außendurchmesser der Hülse in dem entsprechenden Endabschnitt verändert, bevor die Aufweitung erfolgt. Die Anordnung kann dann so getroffen werden, dass sich der Dorn vor der Aufweitung des freien Endabschnittes nicht oder nur geringfügig aus der Hülse hinauserstreckt. Beispielsweise im Zusammenhang mit Sacklöchern kann es vorteilhaft sein, wenn sich der Dorn vor der Aufweitung des freien Endabschnitts der Hülse überhaupt nicht aus diesem Endabschnitt hinauserstreckt, weil dann der anfängliche Abstand zwischen Anschlagflansch und Bohrungsrand ausschließlich durch die Sacklochtiefe und die Länge der Hülse festgelegt wird.

Bei allen Ausführungsformen des erfindungsgemäßen Verfahrens kann vorgesehen sein, dass der weitere Abschnitt der Hülse bei seiner Aufweitung hinsichtlich seines Außendurchmessers an den Innendurchmesser der Bohrung angepasst wird. Auf diese Art und Weise wird die Hülse zumindest im Bereich der aufgeweiteten Abschnitte spielfrei in der Bohrung angeordnet, so dass ein späteres Verkippen der Hülse sicher vermieden werden kann. Außerdem wir durch diese Maßnahme die Verankerung der zumindest einen Erhebung in der Bohrungswand verbessert, weil kein Ausweichraum für Bohrwandmaterial mehr zur Verfügung steht.

Weiterhin kann vorgesehen sein, dass der Anschlagflansch zumindest in einem Abschnitt für den Ansatz eines Werkzeugs ausgelegt ist. Beispielsweise kann der Anschlagflansch zumindest im Bereich seines freien Endabschnittes als Schraubenkopf oder mit Innensechskant ausgelegt sein. Dies ist besonders dann sinnvoll, wenn es sich bei der Verbindung um eine lösbare Verbindung handeln soll, bei der die zumindest eine Erhebung in irgendeiner Form gewindeartig ausgestaltet ist.

Gemäß einer innerhalb des Prioritätsjahres erfolgten Weiterentwicklung des erfindungsgemäßen Verfahrens ist vorgesehen, dass zumindest der freie Endabschnitt der Hülse einen äußeren Hülsenteil und einen inneren Hülsenteil aufweist. Auf diese Weise ist es beispielsweise möglich, die Hülse an unterschiedliche Bohrlochdurchmesser anzupassen, indem unterschiedlich starke äußere Hülsenteile verwendet werden. Auch ist es möglich, für den inneren Hülsenteil und den äußeren Hülsenteil unterschiedliche Materialien zu verwenden, um beispielsweise den äußeren Hülsenteil optimal an das Material des Baukörpers anzupassen. Zusätzlich oder alternativ können äußere Hülsenteile mit verschiedenen Arten/Formen von Erhebungen verwendet werden, um optimale Verankerungseigenschaften bei verschiedenen Baukörpermaterialien sicherzustellen. Beispielsweise erfordert ein poröseres Baukörpermaterial mehrere und/oder sich radial weiter nach außen erstreckende Erhebungen als ein dichtes Baukörpermaterial.

In diesem Zusammenhang wird es als besonders vorteilhaft erachtet, dass der äußere Hülsenteil und der innere Hülsenteil formschlüssig verbunden sind. Ohne darauf beschränkt zu sein, kommen in diesem Zusammenhang beispielsweise Gewindeverbindungen in Betracht. Das äußere Hülsenteil ist dann mit einem Innengewinde ausgestattet, das mit einem entsprechenden Außengewinde des inneren Hülsenteils zusammenwirkt. Es können aber auch Bajonettverbindungen oder Rastverbindungen zum Einsatz kommen, wobei sich Rastverbindungen insbesondere dann anbieten, wenn der äußere und/oder der innere Hülsenteil zumindest abschnittsweise elastisch ausgebildet sind.

Zusätzlich oder alternativ kann vorgesehen sein, dass der äußere Hülsenteil und der innere Hülsenteil kraftschlüssig verbunden sind. Als kraftschlüssige Verbindungen kommen insbesondere Klemmverbindungen in Frage. Die Reibungskräfte können dabei beispielsweise dadurch erhöht werden, dass die Kontaktflächen aufgeraut und/oder geriffelt sind. Kommt beispielsweise als formschlüssige Verbindung ein Gewinde zum Einsatz und soll dieses kurz gehalten werden, um die Verbindung des äußeren und des inneren Hülsenteils schnell herstellen zu können, so ist es beispielsweise möglich, im Bereich des freien Endabschnitts eine kraftschlüssige Verbindung vorzusehen, die automatisch hergestellt wird, wenn eine formschlüssige Verbindung über ein im weiteren Abschnitt der Hülse vorgesehenes Gewinde erfolgt. Umgekehrt ist es beispielsweise natürlich ebenfalls möglich, das Gewinde nur im Bereich des freien Endabschnitts vorzusehen, wobei die kraftschlüssige Verbindung dann im Bereich des weiteren Abschnitts der Hülse erfolgen kann.

Obwohl dies keinesfalls zwingend erforderlich ist, wird es als vorteilhaft erachtet, dass auch der Bereich zwischen dem freien Endabschnitt der Hülse und dem Anschlagflansch einen äußeren Hülsenteil und einen inneren Hülsenteil aufweist. Beispielsweise kann die Hülse ab dem Anschlagflansch und bis zum freien Endabschnitt zweiteilig ausgebildet sein.

Gemäß einer innerhalb des Prioritätsjahres erfolgten Weiterentwicklung der erfindungsgemäßen Hülse ist vorgesehen, dass zumindest der freie Endabschnitt der Hülse einen äußeren Hülsenteil und einen inneren Hülsenteil aufweist.

Erfindungsgemäß sind der äußere Hülsenteil und der innere Hülsenteil formschlüssig verbunden. Auf die vorstehend im Zusammenhang mit dem erfindungsgemäßen Verfahren erläuterten Vorteile wird sinngemäß verwiesen.

Zusätzlich oder alternativ ist es aber auch möglich, dass der äußere Hülsenteil und der innere Hülsenteil kraftschlüssig verbunden sind. Auch diesbezüglich wird auf die vorstehend im Zusammenhang mit dem erfindungsgemäßen Verfahren erläuterten Vorteile sinngemäß verwiesen.

Auch bei der erfindungsgemäßen Hülse kann vorgesehen sein, dass auch der Bereich zwischen dem freien Endabschnitt der Hülse und dem Anschlagflansch einen äußeren Hülsenteil und einen inneren Hülsenteil aufweist.

Auch jedes Befestigungselement, umfassend eine solche Hülse sowie einen zur Aufweitung der Hülse vorgesehenen Dorn, der mit einem Zugstift in Verbindung steht, der sich durch die Hülse und deren Anschlagflansch hindurch erstreckt, soll in den Schutzbereich der vorliegenden Erfindung fallen.

Das gilt ganz besonders für jedes Befestigungselement, bei dem vorgesehen ist, dass es weiterhin ein scheibenförmiges Element umfasst, das die Hülse im Bereich des Anschlagflansches zumindest abschnittsweise umgibt. Das scheibenförmige Element kann dabei aus dem im Rahmen des erfindungsgemäßen Verfahrens erläuterten Materialien bestehen und entsprechende Eigenschaften aufweisen.

Geeignete Hülsen zeichnen sich unter anderem dadurch aus, dass sich ihre axiale Länge um 7 bis 16 % verringert, wenn ihr Außendurchmesser durch Aufweitung um 18 bis 20 % vergrößert wird. Die auf die ursprüngliche Länge normierte Verkürzung kann dann im Bereich von 10 bis 15 % liegen, vorzugsweise im Bereich von 12 bis 13 %.

Im Auslieferungszustand der Hülsen (also vor einer Aufweitung durch Materialumformung) kann das Verhältnis von Wandstärke zu Außendurchmesser 16 bis 20 % betragen, bevorzugt 18 bis 19 %.

Im Hinblick auf die innerhalb des Prioritätsjahres erfolgte Weiterentwicklung der erfindungsgemäßen Hülse wird es als besonders vorteilhaft erachtet, ein Baukastensystem zur Herstellung einer Hülse bereitzustellen, das wenigstens einen inneren Hülsenteil und mehrere äußere Hülsenteile aus unterschiedlichen Materialien und/oder mit unterschiedlich gestalteten Außenumfangsbereichen umfasst. In der Praxis wird ein derartiges Baukastensystem natürlich eine Vielzahl von inneren und äußeren Hülsenteilen umfassen.

Mit einem derartigen Baukastensystem ist es beispielsweise möglich, unterschiedliche Hülsen direkt auf der Baustelle zu konfigurieren und sie beispielsweise an unterschiedliche Bohrlochdurchmesser anzupassen, indem unterschiedlich starke äußere Hülsenteile verwendet werden. Auch in diesem Zusammenhang ist es möglich, für den inneren Hülsenteil und den äußeren Hülsenteil unterschiedliche Materialien zu verwenden, um beispielsweise den äußeren Hülsenteil optimal an das Material des Baukörpers anzupassen. Zusätzlich oder alternativ können äußere Hülsenteile mit verschiedenen Arten/Formen von Erhebungen verwendet werden, um optimale Verankerungseigenschaften bei verschiedenen Baukörpermaterialien sicherzustellen. Beispielsweise erfordert ein poröseres Baukörpermaterial wie erwähnt mehrere und/oder sich radial weiter nach außen erstreckende Erhebungen als ein dichtes Baukörpermaterial.

Für die Erfindung wesentlich ist, dass sie auf der Aufweitung, also Durchmesservergrößerung der Hülse bei gleichzeitiger Verkürzung der Hülse beruht, wobei die Verankerung der zumindest einen Erhebung ohne Rotation der Hülse oder irgendwelcher anderen Komponenten erfolgt.

### Figurenbeschreibung

Ein Ausführungsbeispiel der Erfindung wird nachfolgend anhand der Zeichnungen beispielhaft erläutert.

Es zeigen:
- Figur 1: ein in ein Sackloch eingeführtes Befestigungselement in unverformten Zustand zur Durchführung des erfindungsgemäßen Verfahrens;
- Figur 2: das Detail X aus Figur 1 in vergrößerter Darstellung;
- Figur 3: das Befestigungselement aus Figur 1 nach der Durchführung des erfindungsgemäßen Verfahrens;
- Figur 4: das Detail Y aus Figur 3 in vergrößerter Darstellung;
- Figur 5: ein in ein Sackloch eingeführtes Befestigungselement im unverformten Zustand zur Durchführung des erfindungsgemäßen Verfahrens in einer Ausführungsform gemäß der im Laufe des Prioritätsjahres erfolgten Weiterentwicklung der Erfindung.

Bei der nachfolgenden Beschreibung der Zeichnungen bezeichnen gleiche oder ähnliche Bezugszeichen gleiche oder vergleichbare Komponenten. Dabei sind die durch die im Laufe des Prioritätsjahres erfolgte Weiterentwicklung der Erfindung erforderlich gewordenen Bezugszeichen mit einem Apostroph versehen.

Obwohl das erfindungsgemäße Verfahren für alle denkbaren Arten von Verbindungen eingesetzt werden kann, also beispielsweise zur Fixierung von verschiedenen Bauteilen an irgendwelchen Baukörpern, wird nachstehend auf eine besondere Befestigungsmöglichkeit näher eingegangen, nämlich die Befestigung eines Profilteils 26 an einer Verkleidungsplatte 28, insbesondere einer Verkleidungsplatte aus Faserzement oder Glasfaserbeton.

Ein insgesamt mit 44 bezeichnetes Befestigungselement umfasst eine Hülse 12, einen Dorn 32, der mit einem sich durch die Hülse 12 hindurcherstreckenden Zugstift 34 in Verbindung steht, und ein scheibenförmiges Element 30, welches die Hülse 12 unterhalb eines Anschlagflansches 10 umgibt. Der Anschlagflansch 10 weist in seinem oberen Bereich einen Abschnitt 40 zum Ansetzen eines Werkzeuges in Form eines Sechskantschraubenkopfes auf, der von einer mittigen Bohrung durchsetzt ist, durch die sich der Zugstift 34 erstreckt. Die Hülse 10 weist einen freien Endabschnitt 20 auf, an dessen Außenumfang eine Erhebung 18 in Form einer umlaufenden Rippe vorgesehen ist. Diese Rippe könnte beispielsweise auch sägezahnförmig ausgeführt sein. Der Außenumfang der Hülse 12 ist unterhalb des Anschlagflansches 10 mit Ausnahme der Erhebung 18 konstant. Dabei erweitert sich der Innendurchmesser des freien Endabschnittes 20 der Hülse 12 trichterförmig, indem die Wandstärke der Hülse 12 (außer im Bereich der Erhebung 18) entsprechend abnimmt. In diesem trichterförmig erweiterten Bereich des Endabschnitts 20 der Hülse 12 ist ein sich vom Dorndurchmesser auf den Zugstiftdurchmesser verjüngender Abschnitt 36 des Dorns 32 derart untergebracht, dass sich der Dorn 32 nach unten nur geringfügig aus der Hülse 12 hinauserstreckt. Der Zugstift 34 weist im dargestellten Fall eine Sollbruchstelle 42 in Form einer Kerbe auf.

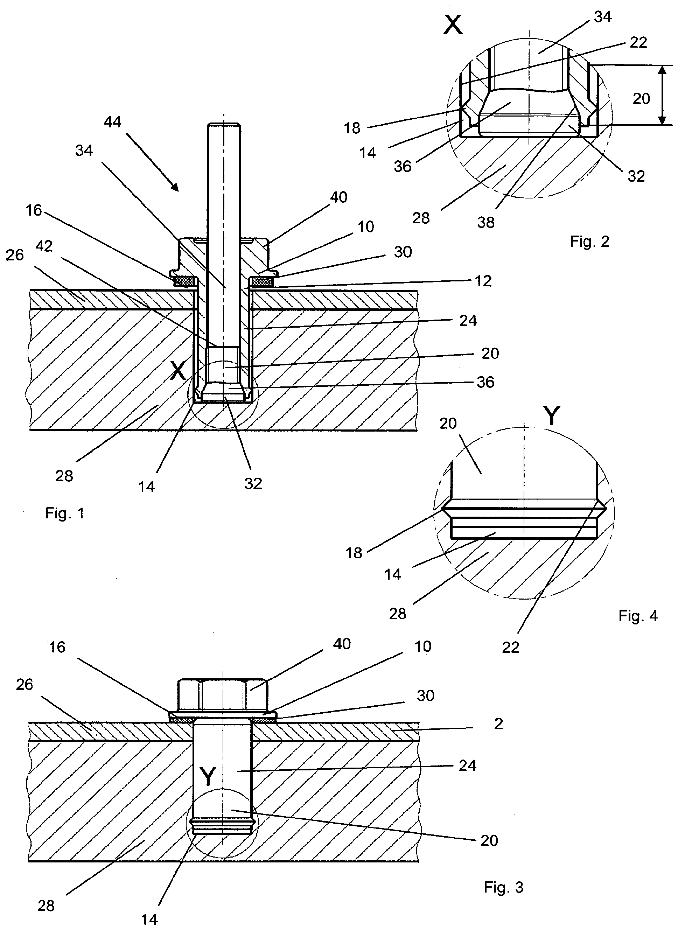

Mit diesem Befestigungselement lässt sich das erfindungsgemäße Verfahren wie folgt durchführen: Zunächst wird die den Anschlagflansch 10 aufweisende Hülse 12 in eine Bohrung 14 eingesetzt, die sich durch das Profilteil 26 und als Sackloch in die Verkleidungsplatte 28 erstreckt. Wie dies Figur 1 zu entnehmen ist, sitzt der Dorn 32 dabei auf dem Boden des Sackloches auf. Die Längenabmessungen des sich aus der Hülse 12 hinauserstreckenden Dorns 32 und des unterhalb des Anschlagflansches 10 befindlichen Abschnitts der Hülse 12 sind dabei so gewählt, dass der Anschlagflansch 10 einen Abstand vom Bohrungsrand 16 der Bohrung 14 aufweist. Um das Profil 26 an dem Baukörper 28 zu befestigen, also die Verbindung herzustellen, wird eine Art von Nietzange an der Oberseite des Abschnitts 40 für den Werkzeugansatz des Anschlagflansches 10 so abgestützt, dass eine bezogen auf die Darstellung nach oben gerichtete Zugkraft auf den Zugstift 34 ausgeübt werden kann. Bei dem Werkzeug nach Art einer Nietzange kann es sich selbstverständlich um eine hydraulisch oder pneumatisch betätigte Vorrichtung handeln, insbesondere um eine Vorrichtung, die dazu geeignet ist, magazinartig mehrere Befestigungselemente 44 vorzuhalten. Durch das Ausüben einer Zugkraft auf den Zugstift 34 wird die Erhebung 18 des freien Endabschnitts 20 der Hülse 12 in der Bohrungswand 22 verankert, weil der freie Endabschnitt 20 der Hülse 12 bei einer nach oben gerichteten Bewegung des Dorns 32 aufgeweitet wird. Nachdem der freie Endabschnitt 20 der Hülse 12 in der Bohrungswand 22 verankert wurde, wird der Anschlagflansch 10 in Richtung auf die feststehende verankerte Erhebung 18 des freien Endabschnitts 20 der Hülse 12 zubewegt, indem ein weiterer Abschnitt 24 der Hülse 12 durch eine weitere nach oben gerichtete Bewegung des Dorns 32 aufgeweitet wird. Dieser weitere Abschnitt 24 der Hülse 12 erstreckt sich im dargestellten Fall (siehe Figur 3) bis knapp unter den Anschlagflansch 10. Bei der Aufweitung des weiteren Abschnitts 24 der Hülse 12 wird dieser Abschnitt 24 hinsichtlich seines Außendurchmessers an den Innendurchmesser der Bohrung 14 angepasst. Die durch die Materialumformung bewirkte axiale Verkürzung der Hülse 12 bewirkt dabei, dass das elastisch kompressible scheibenförmige Element 30 so zwischen dem Anschlagflansch 10 und der Oberfläche des Profils 26 komprimiert wird, dass zwischen dem Profilteil 26 und dem Baukörper 28 eine vorherbestimmte Anpresskraft wirkt. Zu diesem Zweck kann das scheibenförmige Element 30 beispielsweise um 30 bis 70 % komprimiert werden.

Obwohl dies nicht dargestellt ist, kann es sich bei der Bohrung 14 selbstverständlich auch um eine Durchgangsbohrung handeln. In diesem Fall wäre die Vorgehensweise so, dass das Befestigungselement 44 zu Beginn so in die Bohrung 14 eingesetzt würde, dass das scheibenförmige Element 30 in unkomprimiertem Zustand locker auf dem Profilteil 26 aufläge.

Im dargestellten Fall (siehe Figur 3) wird der Großteil des Zugstifts 34 durch das Wirksamwerden der Sollbruchstelle 42 entfernt, wenn der sich verjüngende Abschnitt 36 des Dorns 32 den Bereich des Anschlagflansches 10 erreicht, wo eine Umformung des Materials aufgrund der größeren Materialstärke die Zugkraftgrenze der Sollbruchstelle 42 überschreitet. Der untere Teil des Zugstifts 34 sowie der Dorn 32 bleiben bei dieser Lösung Bestandteil der Verbindung. Wie erwähnt muss dies aber nicht zwingend der Fall sein.

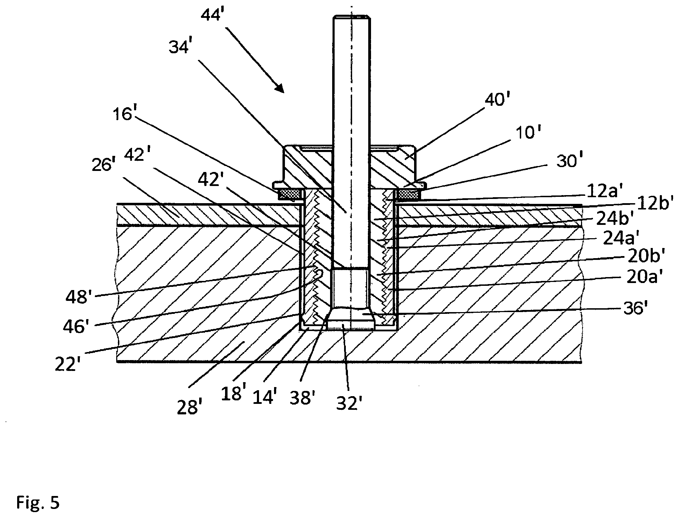

Figur 5 zeigt ein in ein Sackloch eingeführtes Befestigungselement in unverformten Zustand zur Durchführung des erfindungsgemäßen Verfahrens in einer Ausführungsform gemäß der im Laufe des Prioritätsjahres erfolgten Weiterentwicklung der Erfindung. Erläutert werden nur die Unterschiede zu der in den Figuren 1 bis 4 dargestellten Ausführungsform. Ansonsten wird auf obige Beschreibung der Figuren 1 bis 4 verwiesen. Gemäß der Darstellung von Figur 5 umfasst die Hülse ein äußeres Hülsenteil 12a' und ein inneres Hülsenteil 12b'. Die Verbindung der beiden Hülsenteile 12a' und 12b' erfolgt im dargestellten Fall über ein Innengewinde 46' des äußeren Hülsenteils 12a' und ein Außengewinde 48' des inneren Hülsenteils 12b', so dass es sich in diesem Fall um eine formschlüssige Verbindung handelt. Gemäß Figur 5 erstrecken sich das Innengewinde 46' und das Außengewinde 48' praktisch über die gesamte Länge der Hülse, so dass es einen inneren freien Endabschnitt 20a' und einen äußeren freien Endabschnitt 20b' sowie auch einen äußeren weiteren Abschnitt 24a' und einen inneren weiteren Abschnitt 24b' gibt Das ist aber nicht zwingend erforderlich, sondern es können auch kürzere Gewinde vorgesehen werden. Obwohl dies nicht dargestellt ist, können aber auch Verbindungen nach Art eines Bajonettverschlusses oder Rastverbindungen zum Einsatz kommen, wobei sich Rastverbindungen insbesondere dann anbieten, wenn der äußere und/oder der innere Hülsenteil zumindest abschnittsweise elastisch ausgebildet sind. Zusätzlich oder alternativ kann vorgesehen sein, dass der äußere Hülsenteil und der innere Hülsenteil kraftschlüssig verbunden sind, was aber in Figur 5 ebenfalls nicht dargestellt ist. Als kraftschlüssige Verbindungen kommen insbesondere Klemmverbindungen in Frage. Die Reibungskräfte können dabei beispielsweise dadurch erhöht werden, dass die Kontaktflächen aufgeraut und/oder geriffelt sind. Kommt beispielsweise als formschlüssige Verbindung ein Gewinde zum Einsatz und soll dieses kurz gehalten werden, um die Verbindung des äußeren und des inneren Hülsenteils schnell herstellen zu können, so ist es beispielsweise möglich, im Bereich des freien Endabschnitts eine kraftschlüssige Verbindung vorzusehen, die automatisch hergestellt wird, wenn eine formschlüssige Verbindung über ein im weiteren Abschnitt der Hülse vorgesehenes Gewinde erfolgt. Umgekehrt ist es wie erwähnt natürlich ebenfalls möglich, das Gewinde nur im Bereich des freien Endabschnitts vorzusehen, wobei die kraftschlüssige Verbindung dann im Bereich des weiteren Abschnitts der Hülse erfolgen kann.

Die zweiteilige Ausbildung der Hülse 12a', 12b' hat den Vorteil, dass es beispielsweise möglich ist, die Hülse 12a', 12b' an unterschiedliche Bohrlochdurchmesser anzupassen, indem unterschiedlich starke äußere Hülsenteile 12a' verwendet werden. Auch ist es möglich, für den inneren Hülsenteil 12b' und den äußeren Hülsenteil 12a' unterschiedliche Materialien zu verwenden, um beispielsweise den äußeren Hülsenteil 12a' optimal an das Material des Baukörpers 28' anzupassen. Zusätzlich oder alternativ können äußere Hülsenteile 12a' mit verschiedenen Arten/Formen von Erhebungen 18' verwendet werden, um optimale Verankerungseigenschaften bei verschiedenen Baukörpermaterialien sicherzustellen. Beispielsweise erfordert ein poröseres Baukörpermaterial mehrere und/oder sich radial weiter nach außen erstreckende Erhebungen 18' als ein dichtes Baukörpermaterial. Im in Figur 5 dargestellten Fall ist die Erhebung 18' des äußeren Hülsenteils 12a' als umlaufende Rippe ausgebildet.

### Bezugszeichenliste

- 10, 10': Anschlagflansch
- 12: Hülse
- 12a': Äußerer Hülsenteil
- 12b': Innerer Hülsenteil
- 14, 14': Bohrung
- 16, 16': Bohrungsrand
- 18, 18': Erhebung
- 20: Freier Endabschnitt der Hülse
- 20a': Äußerer freier Endabschnitt der Hülse
- 20b': Innerer freier Endabschnitt der Hülse
- 22, 22': Bohrungswand
- 24: Weiterer Abschnitt der Hülse
- 24a': Äußerer weiterer Abschnitt der Hülse
- 24b': Innerer weiterer Abschnitt der Hülse
- 26, 26': Bauteil/Profilteil
- 28, 28': Baukörper/Verkleidungsplatte
- 30, 30': Scheibenförmiges Element
- 32, 32': Dorn
- 34, 34': Zugstift
- 36, 36': Sich verjüngender Abschnitt des Dorns
- 38, 38': Trichterförmig erweiterter Endabschnitt der Hülse
- 40, 40': Abschnitt des Anschlagflansches für Werkzeugansatz
- 42, 42': Sollbruchstelle des Zugstifts
- 44. 44': Befestigungselement
- 46': Innengewinde des äußeren Hülsenteils
- 48': Außengewinde des inneren Hülsenteils

## Patentansprüche

1. Hülse (12; 12a', 12b') zur Herstellung einer Verbindung, umfassend:
- einen Anschlagflansch (10; 10'),
- einen aufweitbaren zum Einsetzen in eine Bohrung vorgesehen freien Endabschnitt (20; 20a'; 20b') mit wenigstens einer Erhebung (18; 18');
- einen weiteren aufweitbaren Abschnitt (24; 24a'; 24b');
- wobei es sich bei der Hülse (12; 12a'; 12b') um eine umfangsgeschlossene Hülse (12; 12a'; 12b') handelt, deren Umfangsgeschlossenheit auch bei einer Aufweitung erhaltbar ist, **dadurch gekennzeichnet, dass**
- zumindest der freie Endabschnitt der Hülse (12a'; 12b') einen äußeren Hülsenteil (12a') und einen inneren Hülsenteil (12b') aufweist, die formschlüssig und/oder kraftschlüssig verbunden sind.

2. Hülse (12; 12a', 12b') nach Anspruch 1, **dadurch gekennzeichnet, dass** sie umfangsgeschlossen und rohrförmig ist, dass sie einen Anschlagflansch (10; 10') aufweist, und dass sie im Bereich eines zum Einsetzen in eine Bohrung vorgesehenen freien Endabschnitts (20; 20a', 20b') zumindest eine Erhebung (18; 18') aufweist, die dazu vorgesehen ist, bei einer Aufweitung des freien Endabschnitts (20; 20a', 20b') in einer Bohrungswand (22; 22') verankert zu werden.

3. Hülse (12a', 12b') nach einem der Ansprüche 1 bis 2, **dadurch gekennzeichnet,**
**dass** auch der Bereich zwischen dem freien Endabschnitt (20a', 20b') der Hülse (12a', 12b') und dem Anschlagflansch (10') einen äußeren Hülsenteil (12a') und einen inneren Hülsenteil (12b') aufweist.

4. Verfahren zur Herstellung einer Verbindung, mit den folgenden Schritten:
- Einsetzen einer Hülse (12; 12a', 12b') nach einem der Ansprüche 1-3 in eine Bohrung (14; 14'), derart, dass der Anschlagflansch (10; 10') einen Abstand von einem dem Anschlagflansch (10; 10') zugewandten Bohrungsrand (16; 16') aufweist;
- Verankern von wenigstens einer Erhebung (18; 18') des freien Endabschnitts (20; 20a', 20b') der Hülse (12; 12a', 12b') in der Bohrungswand (22; 22') durch Aufweitung des freien Endabschnitts (20; 20a', 20b') der Hülse (12; 12a', 12b');
- Bewegen des Anschlagflansches (10; 10') in Richtung auf die wenigstens eine feststehende verankerte Erhebungen (18; 18') des freien Endabschnitts (20; 20a', 20b') der Hülse (12; 12a', 12b') zu, durch Aufweitung des weiteren Abschnitts (24; 24a', 24b') der Hülse.

5. Verfahren nach Anspruch 4, **dadurch gekennzeichnet, dass** sich die Bohrung (14; 14') durch ein Bauteil (26; 26') und in einen Baukörper (28; 28') erstreckt.

6. Verfahren nach einem der vorhergehenden Ansprüche 4 bis 5, **dadurch gekennzeichnet, dass** es sich bei der wenigstens einen Erhebung (18; 18') um eine radial in eine Spitze oder Rundung auslaufende Erhebung, wenigstens eine umlaufende sägezahnförmige Rippe oder einen Gewindeabschnitt handelt.

7. Verfahren nach einem der vorhergehenden Ansprüche 4 bis 6, **dadurch gekennzeichnet,**
**dass** die Aufweitung des freien Endabschnitts (20; 20a', 20b') und des weiteren Abschnitts (24; 24a', 24b') der Hülse (12; 12a', 12b') mit Hilfe eines Dorns (32; 32') erfolgt, der mit einem Zugstift (34; 34') in Verbindung steht, der sich durch die Hülse (12; 12a', 12b') und deren Anschlagflansch (10; 10') hindurch erstreckt und sich auf den Durchmesser des Zugstiftes (34; 34') konisch verjüngt.

8. Verfahren nach einem der vorhergehenden Ansprüche 4 bis 7, **dadurch gekennzeichnet,**
**dass** der weitere Abschnitt (24; 24a', 24b') der Hülse (12; 12a', 12b') bei seiner Aufweitung hinsichtlich seines Außendurchmessers an den Innendurchmesser der Bohrung (14; 14') angepasst wird.

9. Verfahren nach einem der vorhergehenden Ansprüche 4 bis 8, **dadurch gekennzeichnet,**
**dass** der Anschlagflansch (10; 10') zumindest in einem Abschnitt (40, 40') für den Ansatz eines Werkzeugs ausgelegt ist.

10. Verfahren nach Anspruch 4, **dadurch gekennzeichnet, dass** auch der Bereich zwischen dem freien Endabschnitt (20a', 20b') der Hülse (12a', 12b') und dem Anschlagflansch (10') einen äußeren Hülsenteil (12a') und einen inneren Hülsenteil (12b') aufweist.

11. Befestigungselement (44), umfassend eine Hülse (12; 12a', 12b') nach einem der Ansprüche 1 bis 3 sowie einen zur Aufweitung der Hülse vorgesehenen Dorn (32; 32'),
der mit einem Zugstift (34; 34') in Verbindung steht, der sich durch die Hülse (12; 12a', 12b') und deren Anschlagflansch (10; 10') hindurch erstreckt.

12. Hülse (12; 12a', 12b') nach einem der Ansprüche 1 bis 3, **dadurch gekennzeichnet, dass** sich ihre axiale Länge um 7 bis 16 % verringert, wenn ihr Außendurchmesser durch Aufweitung um 18 bis 20 % vergrößert wird.

13. Baukastensystem zur Herstellung einer Hülse (12a', 12b') nach einem der Ansprüche 1 bis 3, **dadurch gekennzeichnet, dass** es wenigstens einen inneren Hülsenteil (12a') und mehrere äußere Hülsenteile (12b') aus unterschiedlichen Materialien und/oder mit unterschiedlich gestalteten Außenumfangsbereichen umfasst.

## Claims

1. A sleeve (12; 12a', 12b') for establishing a connection, comprising:
- a stop flange (10; 10'),
- a widenable free end portion (20; 20a', 20b') provided for insertion into a bore and having at least one elevation (18; 18');
- a further widenable portion (24; 24a', 24b');
- wherein the sleeve (12; 12a', 12b') is a circumferentially closed sleeve (12; 12a', 12b'), the circumferentially closed state of which can also be maintained during widening, **characterized in that**
- at least the free end portion of the sleeve (12a'; 12b') has an external sleeve part (12a') and an internal sleeve part (12b') which are connected in a form-fitting and/or friction-locking manner.

2. The sleeve (12; 12a', 12b') according to claim 1, **characterized in that** it is circumferentially closed and tubular, that it comprises a stop flange (10; 10'), and that it comprises at least one elevation (18; 18') in the region of a free end portion (20; 20a', 20b') provided for insertion into a bore, which elevation is provided so as to be anchored in a bore wall (22; 22') when the free end portion (20; 20a', 20b') is widened.

3. The sleeve (12a', 12b') according to any one of claims 1 to 2, **characterized in that** the region between the free end portion (20a', 20b') of the sleeve (12a', 12b') and the stop flange (10') also comprises an external sleeve part (12a') and an internal sleeve part (12b').

4. A method for establishing a connection, comprising the following steps:
- inserting a sleeve (12; 12a', 12b') according to any one of claims 1-3 into a bore (14; 14') in such a manner that the stop flange (10; 10') is at a distance from a bore edge (16, 16') facing the stop flange (10; 10');
- anchoring of at least one elevation (18; 18') of the free end portion (20; 20a', 20b') of the sleeve (12; 12a', 12b') in the bore wall (22; 22') by widening the free end portion (20; 20a', 20b') of the sleeve (12; 12a', 12b');
- moving the stop flange (10; 10') towards the at least one fixed anchored elevation (18; 18') of the free end portion (20; 20a', 20b') of the sleeve (12, 12a', 12b') by widening the further portion (24; 24a', 24b') of the sleeve.

5. The method according to claim 4,
**characterized in that** the bore (14; 14') extends through a construction component (26; 26') and into a construction element (28; 28').

6. The method according to any one of the preceding claims 4 to 5,
**characterized in that** the at least one elevation (18; 18') is an elevation tapering off radially into a tip or a rounded portion, at least one circumferential sawtooth-shaped rib, or a threaded portion.

7. The method according to any one of the preceding claims 4 to 6,
**characterized in that** the widening of the free end portion (20; 20a', 20b') and of the further portion (24; 24a', 24b') of the sleeve (12; 12a', 12b') takes place by means of a mandrel (32; 32') which is connected to a traction pin (34; 34') which extends through the sleeve (12; 12a', 12b') and the stop flange (10; 10') thereof and which tapers conically to the diameter of the traction pin (34; 34').

8. The method according to any one of the preceding claims 4 to 7,
**characterized in that** when the further portion (24; 24a', 24b') of the sleeve (12; 12a', 12b') is widened, it is adapted with regard to its outer diameter to the inner diameter of the bore (14; 14').

9. The method according to any one of the preceding claims 4 to 8,
**characterized in that** the stop flange (10; 10'), at least in one portion (40, 40'), is designed for applying a tool thereon.

10. The method according to claim 4,
**characterized in that** the region between the free end portion (20a', 20b') of the sleeve (12a', 12b') and the stop flange (10') also comprises an external sleeve part (12a') and an internal sleeve part (12b').

11. A fastening element (44), comprising a sleeve (12; 12a', 12b') according to any one of claims 1 to 3 and a mandrel (32; 32') which is provided for widening the sleeve and is connected to a traction pin (34; 34') which extends through the sleeve (12; 12a', 12b') and the stop flange (10; 10').

12. The sleeve (12; 12a', 12b') according to any one of the claims 1 to 3, **characterized in that** its axial length is reduced by 7 to 16% when its external diameter is increased by 18 to 20% by widening.

13. A modular system for producing a sleeve (12a', 12b') according to any one of claims 1 to 3, **characterized in that** it comprises at least one internal sleeve part (12a') and a plurality of external sleeve parts (12b') made from different materials and/or with differently shaped outer circumferential regions.

## Revendications

1. Manchon (12; 12a' ; 12b') pour la réalisation d'un assemblage, comprenant :
- une bride de butée (10 ; 10'),
- une section d'extrémité (20 ; 20a' ; 20b') libre élargissable prévue pour insertion dans un trou avec au moins un bossage (18 ; 18'),
- une autre section (24 ; 24a' ; 24b') élargissable, sachant que concernant le manchon (12 ; 12a'; 12b)', il s'agit d'un manchon fermé en périphérie (12 ; 12a'; 12b'), dont la fermeture périphérique peut être également obtenue lors d'un élargissement, **caractérisé en ce qu'**au
- moins la section d'extrémité libre du manchon (12a'; 12b') comporte une partie de manchon extérieure (12a') et une partie de manchon intérieure (12b'), qui sont reliées par conformité de forme et/ou conformité de force.

2. Manchon (12; 12a' ; 12b') selon la revendication 1, **caractérisé en ce qu'**il est fermé en périphérie et de forme tubulaire, **en ce qu'**il comporte une bride de butée (10 ; 10') et **en ce que** dans la zone d'une section d'extrémité libre (20 ; 20a', 20b') prévue pour insertion dans un trou, il comporte au moins un bossage (18 ; 18'), qui est prévu pour être ancrée dans une paroi de trou (22 ; 22') lors d'un élargissement de la section d'extrémité libre (20 ; 20a', 20b').

3. Manchon (12a', 12b') selon l'une quelconque des revendications 1 à 2, **caractérisé en ce que** la zone située entre la section d'extrémité libre (20a', 20b') du manchon (12a', 12b') et la bride de butée (10') comporte également une partie de manchon extérieure (12a') et une partie de manchon intérieure (12b').

4. Procédé pour la réalisation d'un assemblage avec les étapes suivantes :
- insertion d'un manchon (12 ; 12a', 12b') selon l'une quelconque des revendications 1 à 3, dans un trou (14 ;14') de telle manière que la bride de butée (10 ; 10') comporte une distance depuis un bord de trou (16 ; 16') tourné vers la bride de butée (10 ; 10'),
- ancrage d'au moins un bossage (18 ; 18') de la section d'extrémité libre (20 ; 20a', 20b') du manchon (12 ; 12a', 12b') dans la paroi d'trou (22 ; 22') par élargissement de la section d'extrémité libre (20 ; 20a', 20b') du manchon (12 ; 12a', 12b'),
- déplacement de la brie de butée (10 ; 10') en direction d'au moins un des bossages (18 ; 18') ancré fixe de la section d'extrémité libre (20 ; 20a', 20b') du manchon (12 ; 12a', 12b') par élargissement de l'autre section (24 ; 24a', 24b') du manchon.

5. Procédé selon la revendication 4,
**caractérisé en ce que** le trou (14 ; 14') s'étend à travers un composant (26, 26') et dans un corps d'ouvrage (28 ; 28').

6. Procédé selon l'une quelconque des revendications précédentes 4 à 5,
**caractérisé en ce**
**que** concernant au moins un bossage (18 ; 18'), il s'agit d'un bossage se terminant radialement en pointe ou en arrondi, d'au moins une nervure périphérique en forme de dent de scie ou d'une section filetée.

7. Procédé selon l'une quelconque des revendications précédentes 4 à 6,
**caractérisé en ce que**
l'élargissement de la section d'extrémité libre (20 ;20a', 20b') et de l'autre section (24 ; 24a', 24b') du manchon (12 ; 12a', 12b') a lieu à l'aide d'un broche (32 ; 32'), qui est en liaison avec une tige de traction (34 ; 34'), qui s'étend à travers le manchon (12 ; 12a', 12b') et la bride de butée (10 ; 10') de celui-ci et se réduit coniquement sur le diamètre de la tige de traction (34, 34').

8. Procédé selon l'une quelconque des revendications précédentes 4 à 7,
**caractérisé en ce que**
l'autre section (24 ; 24a', 24b') du manchon (12 ; 12a', 12b') est adaptée au diamètre intérieur de le trou (14 ; 14') lors de son élargissement eu égard à son diamètre extérieur.

9. Procédé selon l'une quelconque des revendications précédentes 4 à 8,
**caractérisé en ce que**
la bride de butée (10 ; 10') est au moins conçue dans une section (40, 40') pour l'adaptation d'un outil.

10. Procédé selon la revendication 4,
**caractérisé en ce que**
la zone situé entre la section d'extrémité libre (20a', 20b') du manchon (12a', 12b') et la bride de butée (10') comporte également une partie de manchon extérieure (12a') et une partie de manchon intérieure (12b') .

11. Elément de fixation (44), comprenant un manchon (12 ; 12a' ; 12b') selon l'une quelconque des revendications 1 à 3,
ainsi qu'une broche (32 ; 32') prévue pour l'élargissement du manchon, qui est en liaison avec une tige de traction (34, 34'), qui s'étend à travers le manchon (12 ; 12a', 12b') et la bride de butée de celui-ci (10 ; 10').

12. Manchon (12; 12a' ; 12b') selon l'une quelconque des revendications 1 à 3,
**caractérisé en ce que**
sa longueur axiale se réduit de 7 à 16 %, lorsque son diamètre extérieur s'agrandit par élargissement de 18 à 20 %.

13. Système modulaire pour la réalisation d'un manchon (12a' ; 12b') selon l'une quelconque des revendications 1 à 3,
**caractérisé en ce qu'**il comprend au moins une partie de manchon intérieure (12a') et plusieurs parties de manchon extérieures (12b') en différents matériaux et/ou avec des zones de périphérie extérieures de structure différente.
